# FASCICULE DE BREVET EUROPEEN

(11) **EP 0 381 739 B1**
(45) Date de publication et mention de la délivrance du brevet: **31.08.1994**
(21) Numéro de dépôt: 89909002.1
(22) Date de dépôt: 20.07.1989
(51) Int. Cl.: G02F 1/35, C07C 255/58, C07C 255/54

(54) **UTILISATION D'UN MATERIAU ORGANIQUE POUR L'OPTIQUE NON LINEAIRE**
ANWENDUNG EINES ORGANISCHEN MATERIALS FÜR DIE NICHTLINEARE OPTIK
USE OF AN ORGANIC MATERIAL FOR NON LINEAR OPTICS

(30) Priorité: 01.08.1988 FR 8810372
(43) Date de publication de la demande: 16.08.1990
(73) Titulaire: ALCATEL N.V., NL-1077 XX Amsterdam (NL)
(72) Inventeur: FAUVARQUE, Jean-François, F-75006 Paris (FR); AMATORE, Christian, F-75013 Paris (FR); JUTAND, Anny, F-75014 Paris (FR)
(74) Mandataire: Weinmiller, Jürgen
(86) Numéro de dépôt international: FR8900381
(87) Numéro de publication internationale: WO9001723

(56) Documents cités:
- Proceedings of SPIE, vol. 682, Molecular and Polymeric Optoelectronic Materials : Fundamentals and Applications, Garo Khanarian, Editor, 21-22 August 1986, San Diego, CA, US ; S. Allen et al. : "A CNDOVSB program for the calculation of second-order molecular polarisabilities, and its application", pages 202-6.
- Angew. Chem. Int. Ed. Eng., vol. 2, Verlag Chemie GmbH, (Weinheim, DE) ; D.J. Williams : "Organic Polymeric and Non-Polymeric Materials with Large Optical Nonlinearities", pages 690-703.
- Journal of the Optical Society of America B, vol. 4, Nr. 6, June 1987, Optical Soc. of America (US) ; G. Berkovic et al. : "Second-order nonlinear polarizability of various biphenyl derivatives", pages 945-949.
- Journal of Organic Chemistry, vol. 42, Nr. 10, 13 May 1977, Easton (US) ; E.I. Negishi et al. : "Selective Carbon-Carbon Bond Formation via Transition Metal Catalysis.3 (1) A Highly Selective Synthesis of Unsymmetrical Biaryls and Diarylmethanes by the Nickel- or Palladium-Catalyzed Reactions of Aryl- and Benzylzinc Derivatives with Aryl Halides", pages 1821-1823.

## Description

La présente invention concerne l'utilisation d'un matériau organique pour l'optique non linéaire.

Les matériaux présentant des propriétés non linéaires en optique peuvent être utilisés pour de nombreuses applications : doubleurs de fréquence, bistables optiques, commutateurs, modulateurs, coupleurs directifs, amplificateurs paramétriques etc...

On connaît un petit nombre de matériaux inorganiques non isotropes, et en particulier non centrosymétriques, qui possèdent un coefficient quadratique non nul et des propriétés non linéaires en optique ; il s'agit notamment du potassium-dihydrogène-phosphate (KDP), du niobate et du tantalate de lithium (LiNbO₃, LiTaO₃)...

La mise en oeuvre de ces matériaux inorganiques est souvent difficile ; c'est pourquoi on s'est intéressé à des matériaux organiques à propriétés non linéaires, en particulier quand il s'agit de matériaux polymériques, thermoplastiques ou filmogènes.

La non linéarité optique est généralement obtenue en incorporant, par mélange ou greffage chimique dans le matériau organique des molécules ou groupements moléculaires polaires fortement hyperpolarisables.

De telles molécules sont synthétisées en associant un groupe attracteur d'électrons à un groupe donneur d'électrons par l'intermédiaire d'un système transmetteur d'effets électroniques.

On connaît par exemple les matériaux suivants :
- La paranitroaniline (PAN) 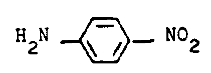
- Le N (nitro 4 phényl) N méthyl amino 2 acétonitrile (NPAN) 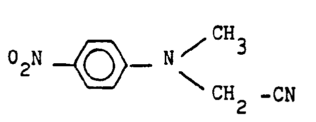
- La dinitro 2-4 phényl L alanine (MAP) 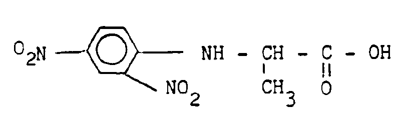
- Le - méthyl 3 nitro 4 pyridine N-oxyde (POM)

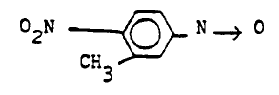

Ces molécules sont caractérisées par leur coefficient d'hyperpolarisabilité défini par le développement en série du moment dipolaire 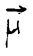 en fonction du champ électrique E.

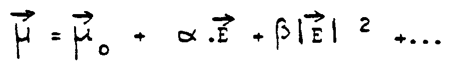

Plus le coefficient β est élevé, plus les molécules présentent de l'intérêt pour l'optique non linéaire. Le coefficient β peut être obtenu par la méthode EFISH (Electric Field Induced Second harmonic generation).

L'article de Berkovic et al paru dans J.Opt.Soc.Am. vol. 4, n° 6/Juin 1987, p. 945 à 949 décrit des molécules présentant une structure cyanobiphényle.

Si les molécules précitées possèdent un coefficient β appréciable, elles présentent généralement l'inconvénient d'absorber la lumière visible et de ne pas être utilisables avec des longueurs d'onde relativement courtes.

La présente invention a pour but de pallier cet inconvénient et d'obtenir des matériaux organiques utilisables à des fréquences plus élevées que les matériaux connus.

Ce but est atteint selon l'invention par l'utilisation du matériau tel que défini dans la revendication 1.

La première variante de matériau utilisé dans l'invention qui répond à la formule 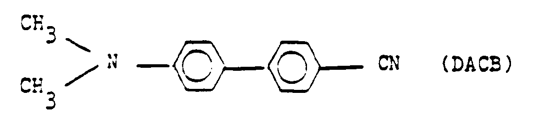
apparaît comme sous produit d'une réaction particulière dans un article de H. QUAST et E. SCHMITT (Liebigs Ann. Chem 732, 42, 63 - 1970) ; aucune application de ce matériau n'est décrite, mais on y propose une méthode de synthèse par décomposition de sels de diazonium et couplage du radical diméthylaminophényle avec le benzonitrile, avec un rendement de 22% au cours d'une opération assez longue et difficile à mettre en oeuvre.

La présente invention a également pour objet une méthode de préparation de ce matériau en couplant le dérivé magnésien 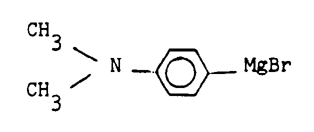
ou le dérivé zincique 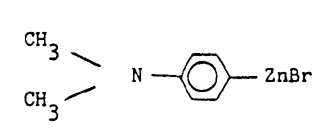
au paraiodocyanobenzène ou au parabromobenzonitrile en présence de quantités catalytiques de complexes du nickel ou du palladium avec un rendement de 85%.

La seconde variante de matériau utilisé dans l'invention répond à la formule 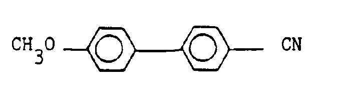
(méthoxy 4 -cyano- 4′ biphényle).

Selon l'invention on peut préparer ce matériau en couplant le dérivé magnésien 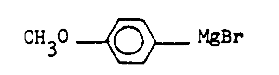
ou le dérivé zincique 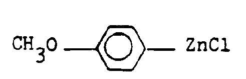
au paraiodocyanobenzène ou au parabromobenzonitrile en présence de quantités catalytiques de complexes du palladium.

D'autres caractériques et avantages de la présente invention apparaîtront au cours de la description suivante de modes de réalisation donnés à titre illustratif mais nullement limitatif.

On prépare tout d'abord du DACB (diméthylamino 4 cyano 4′ biphényl) selon la procédure suivante :

### 1ère phase

On transforme 24g (5 m. moles) de diméthylamino - 4 bromobenzène par la procédure habituelle en organomagnésien dans 80 ml de tétrahydrofuranne (THF) à température ordinaire :

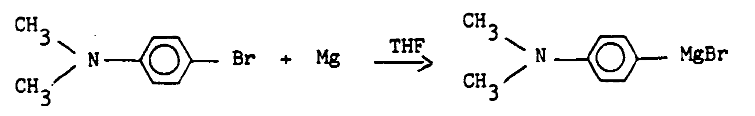

### 2ème phase

On introduit la solution obtenue dans une solution de 10 m. moles de ZnCl₂ dissociées dans 60 ml de THF :

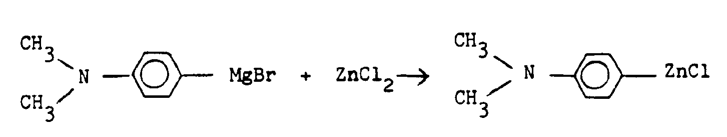

### 3ème phase :

On prépare dans 100 ml de THF une solution de 18,5 g de parabromobenzonitrile et de 2,3 g de catalyseur (triphénylphosphino) palladium, solution à laquelle on ajoute la solution précédente. On laisse la réaction ci-dessous se poursuivre pendant 12 heures à température ordinaire. 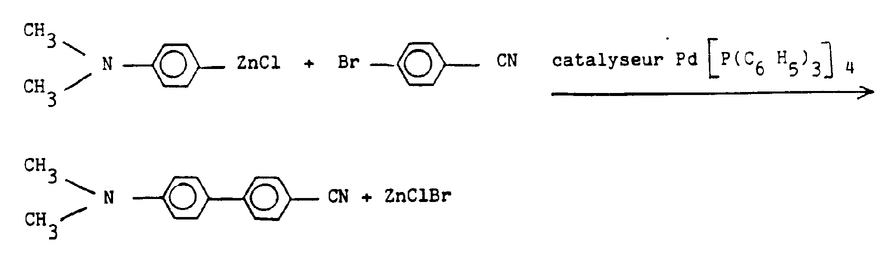
Après hydrolyse, extraction, puis chromatographie sur une colonne de silice, on récupère 17 g de DACB.

Une telle réaction présente un rendement de 85%. Les complexes de palladium sont complètement inertes vis-à-vis du groupe CN et permettent l'utilisation du parabromobenzonitrile. On peut mettre également en oeuvre des complexes du nickel, et remplacer le dérivé zincique par le dérivé magnésien, bien que ce dernier donne des réactions parasites sur le groupe nitrile, ce qui diminue le rendement.

Le DACB ainsi obtenu présente à l'état de poudre un pouvoir de génération de second harmonique analogue à celui du POM défini plus haut. La mesure de son coefficient ε confirme ce fait. Mais en outre sa transparence optique est parfaite dans le domaine de fréquences du spectre visible et proche infra-rouge, contrairement aux dérivés nitrés de l'art antérieur absorbant à partir de 400 nanomètres. En effet son absorption est maximale à 350 nanomètres et son coefficient d'absorption moléculaire ε passe de 27.174 pour 350 nanomètres à 542 pour 400 nanomètres.

Le dérivé nitré de l'art antérieur 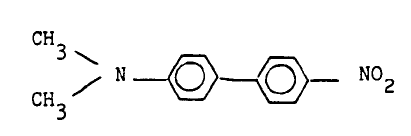
a une absorption maximale à 418 nanomètres correspondant à un ε de 14.605 qui passe à 7.818 avec une longueur d'onde de 450 nanomètres.

Ainsi le matériau selon l'invention peut être utilisé pour générer un second harmonique dans la région bleue du spectre visible à partir d'un laser infrarouge ou proche infrarouge.

On décrit ci-dessous la préparation d'un autre matériau selon l'invention : le méthoxy 4 - cyano - 4′ biphényle

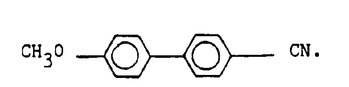

On transforme 5 m. moles de parabromométhoxybenzène en organomagnésien par la méthode habituelle dans 50 ml de THF. On prépare une solution de 6 m. moles de chlorure de zinc anhydre dans 60 ml de THF, solution dans laquelle on ajoute la solution de parabromométhoxybenzène.

On ajoute le tout à une solution de parabromocyanobenzène contenant 2,0 g du catalyseur au palladium défini plus haut. On laisse réagir pendant 12 heures à température ordinaire. Après hydrolyse, extraction et purification par chromatographie sur colonne de silice, on récupère du méthoxy 4 cyano 4′ biphényle. Le rendement de la réaction est de 81%.

On prépare de manière analogue le dérivé nitré méthoxy 4 nitro 4′ biphényle 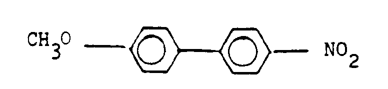
en utilisant 5 m. moles de paraiodonitrobenzène. Le rendement de la réaction est de 72%.

On compare ensuite les propriétés d'absorption des deux matériaux précédents.
Le méthoxy 4 cyano 4′ biphényle a une absorption maximale à 302 nanomètres avec un coefficient ε de 28 523. A 400 nanomètres ε est voisin de zéro, et ne peut être mesuré avec précision avec la méthode utilisée.
Quant au méthoxy 4 nitro 4′ biphényle, son absorption est maximale à 326 nanomètres avec un coefficient ε de 13.814 qui est encore de 738 à 400 nanomètres.

Le matériau utilisé dans l'invention est donc particulièrement intéressant au niveau de ses proprités optiques.

Bien entendu l'invention n'est pas limitée aux modes de synthèse qui ont été décrits ci-dessus.

## Revendications

1. Utilisation pour l'optique non linéaire d'un matériau organique dont la molécule comprend dans sa structure un groupe donneur d'électrons et un groupe attracteur d'électrons reliés par l'intermédiaire d'un système transmetteur d'électrons, ladite molécule répondant à la formule : 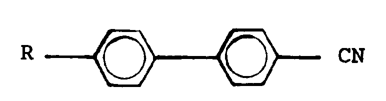 avec R choisi parmi (CH₃)₂ N et CH₃O.

2. Méthode de préparation du matériau tel qu'utilisé dans la revendication 1 avec R = (CH₃)₂N, caractérisée par le fait que l'on couple le dérivé magnésien 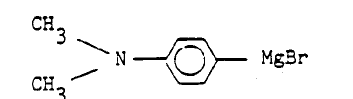 ou le dérivé zincique 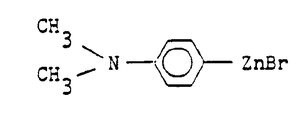 au paraiodocyanobenzène ou au parabromobenzonitrile en présence de quantités catalytiques de complexes du nickel ou du palladium.

3. Méthode de préparation du matériau tel qu'utilisé dans la revendication 1 avec R =CH₃O, caractérisée par le fait que l'on couple le dérivé magnésien 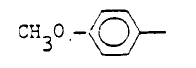 MgBr ou le dérivé zincique 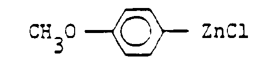 au paraiodocyanobenzène ou au parabromobenzonitrile en présence de quantités catalytiques de complexes du palladium.

## Patentansprüche

1. Verwendung eines organischen Materials für die nichtlineare Optik, wobei das Molekül dieses Materials in seiner Struktur eine Elektronen abgebende Gruppe und eine Elektronen anziehende Gruppe besitzt, die über ein Elektronen übertragendes System miteinander verbunden sind, und wobei das Molekül der folgenden Formel entspricht: 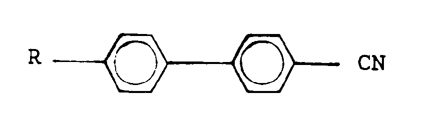 wobei R unter (CH₃)₂N und CH₃O ausgewählt wird.

2. Präparationsmethode für das Material, wie es im Anspruch 1 verwendet wird, wobei als Radikal R=(CH₃)₂N verwendet wird, dadurch gekennzeichnet, daß das Magnesiumderivat 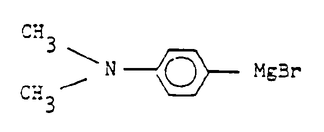 oder das Zinkderivat 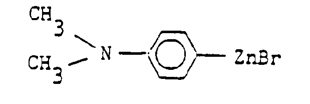 mit Paraiodocyanobenzen oder Parabromobenzonitril in Gegenwart von katalytischen Mengen von Nickel- oder Palladiumkomplexen gekoppelt wird.

3. Präparationsmethode des in Anspruch 1 verwendeten Materials, wobei als Radikal R CH₃O verwendet wird, dadurch gekennzeichnet, daß man das Magnesiumderivat 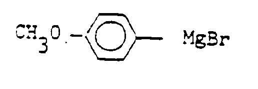 oder das Zinkderivat 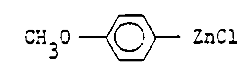 mit Paraiodocyanobenzen oder mit Parabromobenzonitril in Gegenwart von katalytischen Mengen von Palladiumkomplexen koppelt.

## Claims

1. The use for non-linear optics of an organic material, in which the structure of the molecule includes an electron donor group and an electron attractor group connected by means of an electron-transmitting group, said molecule satisfying the formula: 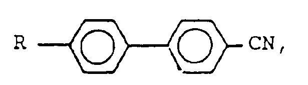 where R is selected from (CH₃)₂N and CH₃O.

2. A method of preparing the material such as that used in claim 1, where R = (CH₃)₂N, the method being characterized by the fact that the magnesium derivative 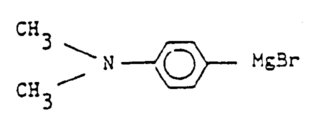 or the zinc derivative 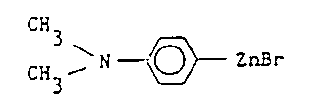 is coupled to paraiodocynanobenzene or to parabromobenzonitrile in the presence of catalytic quantities of nickel or palladium complexes.

3. A method of preparing the material such as that used in claim 1, where
R = CH₃O, the method being characterized by the fact that the magnesium derivative 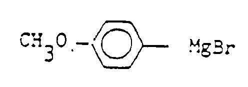 or the zinc derivative 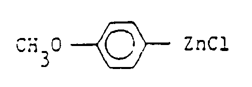 is coupled to paraiodocyanobenzene or to parabromobenzonitrile in the presence of catalytic quantities of palladium complexes.
